# EUROPEAN PATENT APPLICATION

(11) **EP 4 581 992 A1**
(43) Date of publication of application: **09.07.2025**
(21) Application number: 23859710.8
(22) Date of filing: 26.04.2023
(51) Int. Cl.: A47J 43/00, B25J 17/00, F16H 1/32

(54) **POWER TRANSMISSION DEVICE AND COOKING ROBOT**

(30) Priority: 29.08.2022 JP 2022136126
(71) Applicant: Sumitomo Heavy Industries, Ltd., Tokyo 141-6025 (JP)
(72) Inventor: TAMURA Mitsuhiro, Yokosuka-shi Kanagawa 237-8555 (JP)
(74) Representative: Louis Pöhlau Lohrentz
(86) International application number: PCT/JP2023/016460
(87) International publication number: WO 2024/047939

(57) **Abstract**

A power transmission device 22-1 that is incorporated in a cooking robot equipped with a cooking attachment includes an output member 70-1 made of a material having lower thermal conductivity than another member 90 of the power transmission device 22-1. In this way, cooking heat that is transferred from the cooking attachment side to the output member of the power transmission device can be blocked as much as possible by the output member, and it is possible to make it difficult for the cooking heat to be transferred from the output member to other locations of the power transmission device by heat conduction.

## Description

### Technical Field

The present disclosure relates to a power transmission device that is incorporated in a cooking robot.

### Background Art

In recent years, the use of robots has started to expand from industry to the service industry. A cooking robot that supports cooking has been proposed as a service robot that is used in the service industry. As an example thereof, PTL 1 discloses a cooking robot that is equipped with a cooking attachment.

### Citation List

### Patent Literature

[PTL 1] International Publication No. 2020/071150

### Summary of Invention

### Technical Problem

The cooking robot is in an environment where cooking heat (described later) is likely to be applied from heating equipment or the like during cooking using the cooking attachment. In a power transmission device that is incorporated in the cooking robot, a technique for taking measures in relation to such cooking heat has not yet been proposed.

One object of the present disclosure is to provide a technique capable of realizing a measure against cooking heat in a power transmission device that is incorporated in a cooking robot.

### Solution to Problem

A power transmission device according to an aspect of the present disclosure is a power transmission device that is incorporated in a cooking robot including a mounting portion on which a cooking attachment is mounted, and that includes an output member made of a material having lower thermal conductivity than another member of the power transmission device.

A cooking robot according to another aspect of the present disclosure is a cooking robot including a mounting portion on which a cooking attachment is mounted, the cooking robot including: a first power transmission device that is incorporated in a first drive unit close to the mounting portion in the cooking robot; and a second power transmission device that is incorporated in a second drive unit farther from the mounting portion than the first drive unit in the cooking robot, in which the first power transmission device is the power transmission device according to the above aspect, and the second power transmission device includes a second output member made of a material having higher thermal conductivity than a first output member which is an output member of the first power transmission device.

### Advantageous Effects of Invention

According to the present disclosure, it is possible to realize a measure against cooking heat in a power transmission device that is incorporated in a cooking robot.

### Brief Description of Drawings

Fig. 1 is a schematic diagram showing a cooking robot according to an embodiment.
Fig. 2 is a side sectional view showing a first power transmission device according to the embodiment.
Fig. 3 is a side sectional view showing a second power transmission device according to the embodiment.

### Description of Embodiments

Hereinafter, embodiments will be described. The same components are denoted by the same reference numerals, and overlapping description is omitted. In each drawing, for convenience of description, the components are appropriately omitted, enlarged, or reduced. The drawings shall be viewed according to the directions of the reference numerals.

A background to the conception of a power transmission device of an embodiment will be described. As a result of the study on a cooking robot, the inventor of the present invention has obtained the following new findings. The cooking robot is in an environment where cooking heat is likely to be applied during cooking using a cooking attachment. The cooking heat is applied from, for example, heating equipment such as a stove or an IH heater, cooking equipment heated by the heating equipment, or a foodstuff. The cooking heat as referred to herein refers to heat that is applied from the outside to the cooking robot and the cooking attachment by cooking involving heating of the foodstuff.

The cooking heat is particularly likely to be applied to the cooking attachment that approaches the heating equipment, the cooking equipment, or the like. The cooking heat applied to the cooking attachment is transmitted from a tip part (a mounting portion) on which the cooking attachment is mounted in the cooking robot to a base end side by heat conduction. In this process, the cooking heat is first transmitted from an output member in the power transmission device incorporated in the cooking robot, and then transmitted from the output member to another location by heat conduction. The inventor of the present invention has newly found that such cooking heat is transmitted in a manner unique to a power transmission device that is incorporated in a cooking robot.

In addition, the inventor of the present invention has newly found that, as a measure against cooking heat that is applied to a cooking robot, it is favorable when an output member to which the cooking heat is first transmitted is made of a material having lower thermal conductivity than another member. In this way, the cooking heat that is transmitted from the cooking attachment side to the power transmission device can be blocked as much as possible by the output member, and it is possible to make it difficult for the cooking heat to be transferred from the output member to other locations of the power transmission device by heat conduction. As a result, it is possible to realize a measure against the cooking heat. By avoiding the transfer of the cooking heat to the other locations of the power transmission device in this manner, the occurrence of adverse effects due to an excessive temperature rise at the other locations is suppressed. For example, in a case where the power transmission device includes a gear pair that meshes with each other, the occurrence of adverse effects (shortening of life, or the like) due to an excessive temperature rise at a meshing location of the gear pair is suppressed. The gear pair as referred to herein refers to, for example, a combination of an external gear and an internal gear to be described later. Hereinafter, the details of the power transmission device of the embodiment will be described.

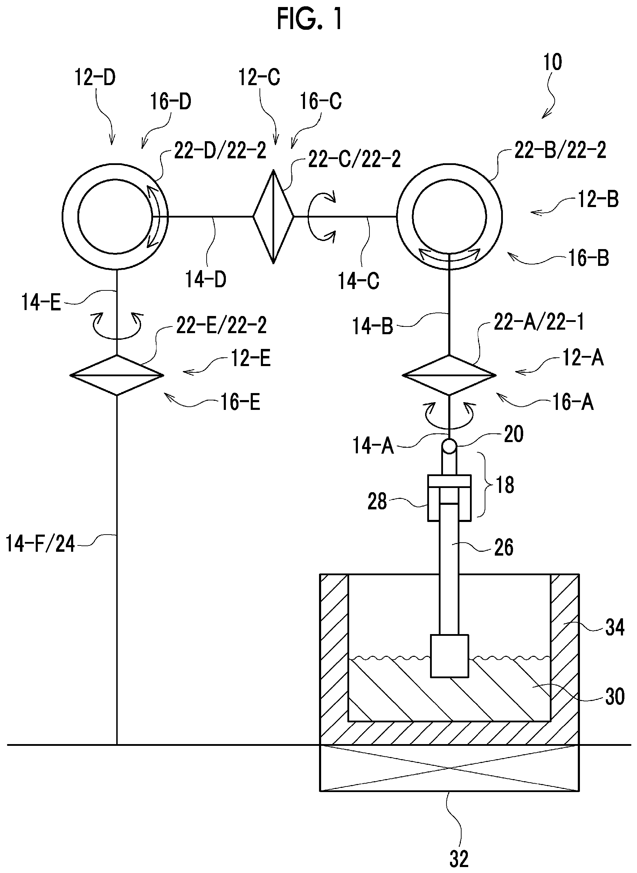

Fig. 1 is referred to. A cooking robot 10 is an articulated robot. The cooking robot 10 of the present embodiment has five joints. However, the number of joints is not particularly limited, and may be four or less, six or more, or the like. The cooking robot 10 includes a plurality of joint portions 12-A to 12-E, a plurality of robot members 14-A to 14F that are connected in series by the plurality of joint portions 12-A to 12-E to be capable of turning or rotating, a plurality of drive units 16-A to 16E, each of which is incorporated in each of the plurality of joint portions 12-A to 12-E, and a mounting portion 20 on which a cooking attachment 18 is mounted. Here, among the plurality of drive units 16-A to 16-E, the drive unit 16-A closest to the mounting portion 20 in the cooking robot 10 is referred to as a first-stage drive unit 16-A, the drive unit 16-B next to the first-stage drive unit 16-A is referred to as a second-stage drive unit 16-B, and the drive unit 16-C next to the second-stage drive unit 16-B is referred to as a third-stage drive unit 16-C, and the like. In the same manner, power transmission devices 22 below are also referred to as a first-stage power transmission device 22-A, a second-stage power transmission device 22-B, a third-stage power transmission device 22-C, and the like.

Among the plurality of robot members 14-A to 14F, the robot member 14-F closest to the base end side serves as a base 24 for supporting the other members of the cooking robot 10, and the robot members 14-A to 14E other than the robot member 14-F serve as arm members. In the present embodiment, the robot members 14-A to 14-E on the tip end side among the robot members 14-A to 14-F adjacent to each other are connected to be rotatable with respect to the robot members 14-B to 14-F on the base end side at the joint portions 12-A to 12-E. The "tip end side" as referred to herein refers to the mounting portion 20 side in the cooking robot 10, and the "base end side" refers to the base 24 side in the cooking robot 10.

The drive units 16-A to 16-E drive the robot members 14-A to 14-E on the tip end side out of the two robot members 14-A to 14-F connected at the joint portions 12-A to 12-E by the power that is transmitted through the power transmission devices 22-A to 22-E incorporated in the drive units 16-A to 16-E. The drive units 16-A to 16-E of the present embodiment drive the robot members 14-A to 14-E on the tip end side to rotate (turn) the robot members 14-A to 14-E.

The mounting portion 20 is provided at the robot member 14-A closest to the tip end side, among the plurality of robot members 14-A to 14-F. The mounting portion 20 may be detachably equipped with the cooking attachment 18.

The cooking attachment 18 is used for cooking a foodstuff 30 or assisting in the cooking. In order to realize this, the cooking attachment 18 of the present embodiment cooks the foodstuff 30 by using cooking equipment 26. In addition, the cooking attachment 18 may cook the foodstuff 30 by supplying a cooking medium (seasoning, water, heat, cold air, or the like). In addition, the cooking attachment 18 may assist in the cooking by washing the cooking equipment 26 by supplying a washing medium (water, detergent, or the like) to the cooking equipment 26 after the cooking, or by discarding unnecessary items generated during the cooking to a discard space. Specific examples of the cooking and the cooking assistance realized by the cooking attachment 18 in this manner are not particularly limited.

When cooking the foodstuff 30 by using the cooking equipment 26, a cooking equipment support portion 28 that detachably supports the cooking equipment 26, which is a separate body from the cooking attachment 18, is incorporated in the cooking attachment 18, or the cooking equipment 26 itself is incorporated in the cooking attachment 18. Here, as an example of the former, an example is shown in which the cooking equipment 26 is a spatula and the cooking equipment support portion 28 is a gripping portion (gripper) that grips the cooking equipment 26. In addition, here, an example is shown in which the foodstuff 30 is cooked by moving the cooking equipment 26 by the cooking robot 10 such that the foodstuff 30 in a pot 34 heated by heating equipment 32 is stirred by the spatula. In this manner, in a case where the foodstuff 30 is cooked using the cooking equipment 26, the foodstuff 30 is cooked by moving the cooking equipment 26 by the cooking robot 10.

A specific example of the cooking equipment 26 is not particularly limited, and in addition thereto, for example, a pot, a frying pan, a kettle, a bowl, a cooking net (a strainer net, a hot water strainer net, a fry basket, or the like), cooking chopsticks, tongs, a ladle, a spoon, a fork, a masher, or the like may be used. A specific example of the cooking equipment support portion 28 is not particularly limited, and in addition thereto, for example, the cooking equipment support portion 28 may be configured by an adsorption portion that adsorbs the cooking equipment 26 by a negative pressure, a magnetic force, or the like, a scooping portion that scoops up the cooking equipment 26, or the like.

The cooking robot 10 cooks the foodstuff 30 by using the cooking attachment 18 in accordance with control by a control unit (not shown). For example, the cooking robot 10 may replace the cooking attachment 18 according to the cooking content of the foodstuff 30 from the plurality of cooking attachments 18 stored in a storage space (not shown) and cook the foodstuff 30 by using the cooking attachment 18. In addition, the cooking robot 10 may repeatedly perform only the specific cooking corresponding to the cooking attachment 18 by using the dedicated cooking attachment 18. In addition, for example, the cooking robot 10 may cook the foodstuff 30 in cooperation with another cooking robot 10 or a user.

The cooking robot 10 described above includes a first power transmission device 22-1 that is incorporated in a first drive unit 16-1 close to the mounting portion 20 in the cooking robot 10, and a second power transmission device 22-2 that is incorporated in a second drive unit 16-2 farther from the mounting portion 20 than the first drive unit 16-1 in the cooking robot 10. The expression "close" as referred to herein means that the first drive unit 16-1 is located on the tip end side with respect to the second drive unit 16-2 in the cooking robot 10. In the present embodiment, the first drive unit 16-1 is configured by the first-stage drive unit 16-A closest to the mounting portion 20 among the plurality of drive units 16. In addition, the second drive unit 16-2 is configured by each of the second-stage drive unit 16-B to the fifth-stage drive unit 16-E that are located on the base end side with respect to the first-stage drive unit 16-A in the cooking robot 10. In addition, the first power transmission device 22-1 is configured by the first-stage power transmission device 22-A, and the second power transmission device 22-2 is configured by each of the second-stage power transmission device 22-A to the fifth-stage power transmission device 22-E.

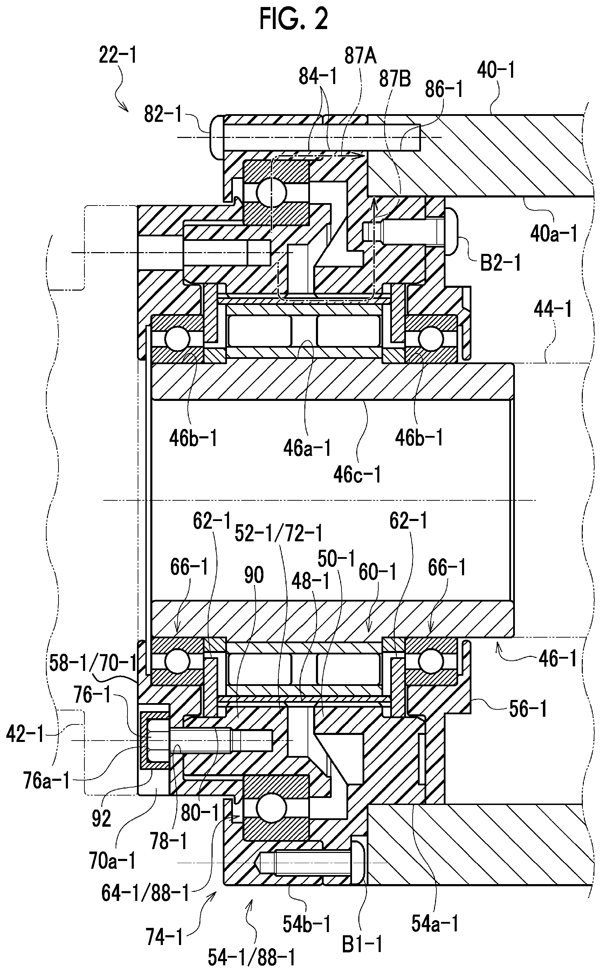

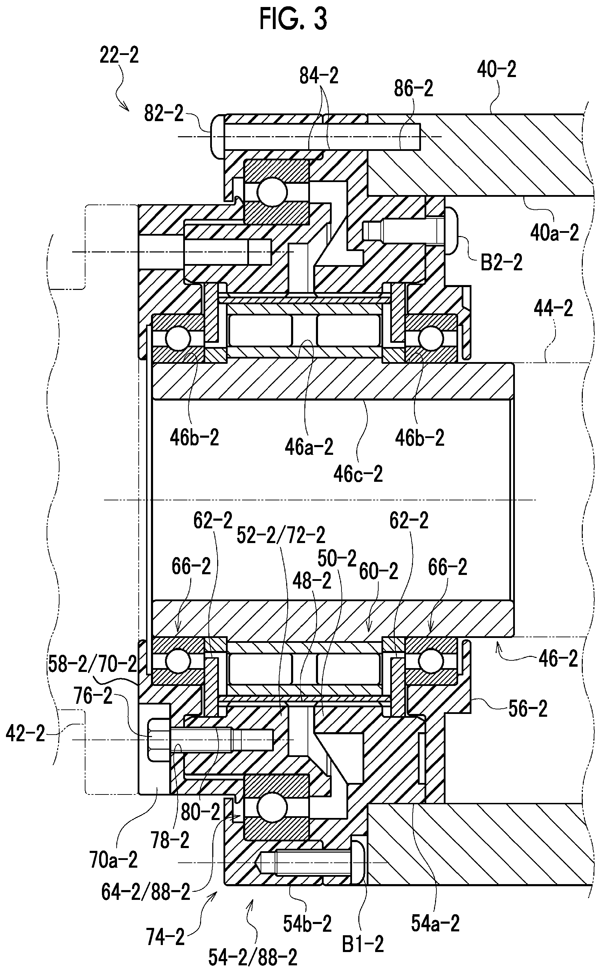

Figs. 2 and 3 are referred to. Hereinafter, the first power transmission device 22-1 and the second power transmission device 22-2 will be described. Many components are common to the first power transmission device 22-1 and the second power transmission device 22-2. Hereinafter, the components common thereto will be described first. In a case where the first power transmission device 22-1 and the second power transmission device 22-2 are collectively referred to without being distinguished from each other, the first power transmission device 22-1 and the second power transmission device 22-2 are collectively referred to as a "power transmission device 22". In addition, in a case where the components common to the first power transmission device 22-1 and the second power transmission device 22-2 are to be distinguished, the expressions "first" and "second" are added to the beginning of the components, and "-1" and "-2" are added to the end of the reference numerals of the components. On the other hand, in a case where the common components are collectively referred to without being distinguished, the expressions (first and the like) for distinguishing the common components are omitted. For example, in a case where an output member 70 is a common component, when the output member 70 is distinguished in the first power transmission device 22-1 and the second power transmission device 22-2, the output member 70 is described as a "first output member 70-1" and a "second output member 70-2". On the other hand, in a case where these are not distinguished from each other, these are simply referred to as an "output member 70".

The cooking robot 10 includes a fixed member 40 to which the power transmission device 22 is fixed and which supports the power transmission device 22, and a driven member 42 that is driven by the power transmission device 22. The fixed member 40 includes a first fixed member 40-1 that supports the first power transmission device 22-1, and a second fixed member 40-2 that supports the second power transmission device 22-2. The driven member 42 includes a first driven member 42-1 that is driven by the first output member 70-1 of the first power transmission device 22-1, and a second driven member 42-2 that is driven by the second output member 70-2 of the second power transmission device 22-2. The driven member 42 is connected to the output member 70 by using a bolt (not shown) or the like. Each of the fixed member 40 and the driven member 42 is the robot member 14 (either an arm member or a base member) described above.

The power transmission device 22 of the present embodiment is a driven device that transmits the power input from a driving device 44. The driving device 44 of the present embodiment is a motor. However, it may be a gear motor, an engine, or the like, in addition to the motor. The driving device 44 is accommodated in a hollow portion 40a provided in the fixed member 40.

In the present embodiment, the power transmission device 22 serving as the driven device is a gear device. The gear device is a tubular bending meshing type gear device. The bending meshing type gear device includes a wave generator shaft 46 to which rotation is input from the driving device 44, an external gear 48 which is flexibly deformed by the wave generator shaft 46, and a speed change internal gear 50 and an output internal gear 52 that mesh with the external gear 48. In addition, the gear device includes a casing 54, an input-side cover 56, and a counter input-side cover 58. Hereinafter, a driving device 44 side in an axial direction along a rotation center line of the output member 70 (described later) of the power transmission device 22 will be referred to as an input side, and the opposite side will be referred to as a counter input side.

The wave generator shaft 46 includes a wave generator 46a that flexibly deforms the external gear 48, and shaft portions 46b that are provided on both sides in the axial direction of the wave generator 46a. The wave generator shaft 46 is an example of an input shaft to which rotation is input from the driving device 44. A hollow portion 46c penetrating in the axial direction is formed in the central portion of the wave generator shaft 46. In a cross section perpendicular to the axial direction of the wave generator 46a, the outer peripheral shape of the wave generator 46a is an elliptical shape, and the outer peripheral shape of the shaft portion 46b is a circular shape. The term "ellipse" as referred to herein is not limited to a geometrically strict ellipse, and also includes a substantially ellipse.

The external gear 48 is a tubular member having flexibility. The outer peripheral portion of the external gear 48 is provided with external teeth. The external gear 48 is supported to be rotatable relative to the wave generator 46a via a wave generator bearing 60. Regulating members 62 that restrict the axial movement of the external gear 48 are disposed on both sides in the axial direction of the external gear 48.

The inner peripheral portion of the speed change internal gear 50 is provided with internal teeth that mesh with the external teeth of the input-side portion of the external gear 48. The inner peripheral portion of the output internal gear 52 is provided with internal teeth that mesh with the external teeth of the counter input-side portion of the external gear 48. The speed change internal gear 50 has the number of internal teeth (for example, 102) different from the number of external teeth (for example, 100) of the external gear 48, and the output internal gear 52 has the number of internal teeth that is the same number as the number of external teeth of the external gear 48.

The casing 54 includes an input-side casing member 54a and a counter input-side casing member 54b. The input-side casing member 54a and the counter input-side casing member 54b are connected to each other by a bolt B1. The input-side casing member 54a also serves as the speed change internal gear 50. The counter input-side casing member 54b is disposed radially outside the output internal gear 52.

A main bearing 64 is disposed between the counter input-side casing member 54b and the output internal gear 52. Here, the main bearing 64 is shown as a ball bearing. However, a specific example thereof is not particularly limited, and it may be a roller bearing, a cross roller bearing, an angular ball bearing, a tapered bearing, or the like. The input-side casing member 54a and the counter input-side casing member 54b are disposed on both sides in the axial direction of the outer ring of the main bearing 64, and function as bearing retainers for the outer ring, which restrict the axial movement of the outer ring of the main bearing 64. The output internal gear 52 and the counter input-side cover 58 are disposed on both sides in the axial direction of the inner ring of the main bearing 64, and function as bearing retainers for the inner ring, which restrict the axial movement of the inner ring of the main bearing 64. Here, an example is shown in which the main bearing 64 includes a dedicated outer ring and a dedicated inner ring. However, at least one of the outer ring and the inner ring may also serve as the other member (the casing 54, the output internal gear 52, or the like).

The input-side cover 56 is disposed on the input side in the axial direction with respect to the external gear 48 and covers the external gear 48 from the input side. The input-side cover 56 is connected to the speed change internal gear 50 by a bolt B2. The counter input-side cover 58 is disposed on the counter input side in the axial direction with respect to the external gear 48 and covers the external gear 48 from the counter input side. An input bearing 66 is disposed between each of the input-side cover 56 and the counter input-side cover 58 and the shaft portion 46b of the wave generator shaft 46.

Here, the power transmission device 22 includes the output member 70, a connected member 72 to which the output member 70 is connected, and a fixing member 74 that is fixed to the external fixed member 40.

The output member 70 drives the driven member 42 by outputting power (here, rotation) to the driven member 42 of the cooking robot 10. The output member 70 is one of the casing 54 and the counter input-side cover 58, and in the present embodiment, it is the counter input-side cover 58. In addition, the output member 70 may be the casing 54.

The connected member 72 of the present embodiment is the output internal gear 52 connected to the output member 70 by using a connection member 76. The connection member 76 of the present embodiment is a bolt. However, it may be a rivet or the like. The connection member 76 of the present embodiment is inserted into an insertion hole 78 (non-threaded hole) provided in the output member 70, and is screwed into a female screw hole 80 provided in the connected member 72, thereby connecting the output member 70 and the connected member 72. The connection member 76 connects the output member 70 and the connected member 72 to each other in a state where the output member 70 and the connected member 72 are in contact with each other.

The fixing member 74 of the present embodiment is the casing 54 that is connected to the fixed member 40 by using another connection member 82. The connection member 82 of the present embodiment is a bolt. However, it may be a rivet or the like. The connection member 82 is inserted into an insertion hole 84 (non-threaded hole) provided in the casing 54 (the input-side casing member 54a and the counter input-side casing member 54b) and is screwed into a female screw hole 86 provided in the fixed member 40. The connection member 82 connects the fixing member 74 and the fixed member 40 to each other in a state where the fixing member 74 and the fixed member 40 are in contact with each other.

The power transmission device 22 includes at least one heat transfer path member 88 provided on one heat transfer path 87A extending from the connected member 72 to the fixed member 40 of the cooking robot 10. The "heat transfer path 87A" as referred to herein refers to a heat transfer path by heat conduction from the connected member 72 to the fixed member 40. As the heat transfer paths 87A and 87B here, in the present embodiment, there are a first heat transfer path 87A in which the connected member 72, the main bearing 64, the casing 54, and the fixed member 40 are present in this order, and a second heat transfer path 87B in which the connected member 72 (the output internal gear 52), the external gear 48, the speed change internal gear 50, the casing 54, and the fixed member 40 are present in this order. Here, an example in which the member on the first heat transfer path 87A is the heat transfer path member 88 is described. That is, the heat transfer path member 88 of the present embodiment includes the main bearing 64 and the casing 54 (the input-side casing member 54a and the counter input-side casing member 54b). In addition, the member on the other heat transfer path (for example, the second heat transfer path 87B) may be the heat transfer path member 88. The heat transfer path member 88 transfers the heat of the connected member 72 to the fixed member 40 by heat conduction.

The operation of the power transmission device 22 (gear device) described above will be described. When the wave generator 46a of the wave generator shaft 46 rotates, the external gear 48 is flexibly deformed to form an elliptical shape matching the shape of the wave generator 46a. When the external gear 48 is flexibly deformed in this manner, the meshing positions between the external gear 48 and the internal gears 50 and 52 change in the rotation direction of the wave generator 46a. In this case, each time the meshing position between the external gear 48 and the speed change internal gear 50, which have different numbers of teeth, makes one rotation, the meshing teeth of these gears are shifted in the circumferential direction. As a result, one (in the present embodiment, the external gear 48) of the external gear 48 and the speed change internal gear 50 rotates, and the axial rotation component thereof is taken out by the output member 70 as output rotation. In the present embodiment, the external gear 48 and the output internal gear 52 synchronize with each other because they have the same number of teeth, and the axial rotation component of the external gear 48 is taken out by the counter input-side cover 58 as the output member 70 through the output internal gear 52 which synchronizes with the external gear 48. At this time, with respect to the input rotation input to the wave generator shaft 46, the output rotation speed-changed (here, speed-reduced) at a change gear ratio corresponding to a difference in the number of teeth between the external gear 48 and the speed change internal gear 50 is taken out by the output member 70.

Hereinafter, the features of the first power transmission device 22-1 will be described. Fig. 2 is referred to. The first output member 70-1 is made of a material having lower thermal conductivity than another member 90 of the first power transmission device 22-1. The "other member 90" refers to a member that is incorporated in the first power transmission device 22-1 when the first power transmission device 22-1 is provided from a provider (for example, a seller of the first power transmission device 22-1) by shipment or the like before being incorporated in the cooking robot 10. The "other member 90" does not include a member that is not present when the first power transmission device 22-1 is provided, and that is added when the first power transmission device 22-1 is incorporated in the cooking robot 10. The "other member 90" as referred to herein refers to the first connected member 72-1 in the present embodiment. However, a specific example thereof is not particularly limited, and it may be the other member (for example, the first fixing member 74-1, the first connection member 76-1, or the like).

In the present embodiment, the first output member 70-1 and the other member 90 are made of a resin-based material. Specifically, the first output member 70-1 and the other member 90 are made of a fiber reinforced resin as a resin-based material. The resin-based material as referred to herein refers to a material whose main material is resin. The resin-based material may be composed of only resin as a main material, or may be composed of a composite material of a base material resin as a main material and another member. The composite material as referred to herein refers to, for example, a cloth bake, a paper bake, or the like, in addition to the fiber reinforced resin. By configuring the first output member 70-1 and the other member 90 with the resin-based material in this manner, it is possible to achieve weight saving and cost reduction of the first power transmission device 22-1, compared to a case where the first output member 70-1 and the other member 90 are made of a metal-based material.

In a case where the first output member 70-1 and the other member 90 are made of a fiber reinforced resin, at least one of the following means (1) and (2) may be adopted in order to increase the thermal conductivity of the other member 90 with respect to the first output member 70-1. The means (1) is to adopt, as the reinforcing fibers of the other member 90, reinforcing fibers having higher thermal conductivity than the reinforcing fibers of the first output member 70-1. The means (2) is to adopt, as the base material resin of the other member 90, a base material resin having higher thermal conductivity than the base material resin of the first output member 70-1. In the present embodiment, only (1) of (1) and (2) is adopted. That is, both the first output member 70-1 and the other member 90 are made of the fiber reinforced resins having the same base material resin, and as the reinforcing fiber of the other member 90, a reinforcing fiber having higher thermal conductivity than the reinforcing fiber of the first output member 70-1 is adopted. In this manner, only by changing the type of the reinforcing fiber between the first output member 70-1 and the other member 90, it is possible to increase the thermal conductivity of the other member 90 with respect to the first output member 70-1 while securing the intensity of the first output member 70-1 and the other member 90 (in other words, it is possible to make the thermal conductivity of the first output member 70-1 lower than the thermal conductivity of the other member 90).

In order to satisfy the condition of the means (1), in the present embodiment, carbon fibers are adopted as the reinforcing fibers having high thermal conductivity of the other member 90. In addition, in order to satisfy the condition of the means (1), as the reinforcing fibers having low thermal conductivity of the first output member 70-1, reinforcing fibers other than the carbon fiber are adopted, and as an example thereof, a glass fiber, an aramid fiber, a polyethylene fiber, a zylon fiber, a boron fiber, or the like may be adopted. In addition, in order to satisfy the condition of the means (1), it is preferable to adopt a heat-resistant resin having excellent heat resistance as the base material resin of the first output member 70-1 and the other member 90. In the case of the general-purpose engineering plastic, for example, as the heat-resistant resin, polyamide (PA), polycarbonate (PC), polyacetal (POM), or the like may be adopted. In addition, in the case of the special engineering plastic, for example, polyether ether ketone (PEEK), polyamide imide (PAI), polyphenylene sulfide (PPS), or the like may be adopted as the heat-resistant resin. The materials listed here may be used as the resin in a case where the resin-based material is formed of only resin as a main material.

In this manner, the first output member 70-1 is made of a material having a lower heat transfer coefficient than the other member 90, so that, as described above, in the first power transmission device 22-1, the cooking heat transmitted from the cooking attachment side (the first driven member 42-1 side) can be blocked as much as possible by the first output member 70-1. Eventually, it is possible to make the cooking heat difficult to be transferred from the first output member 70-1 to another location (for example, the other member 90) of the first power transmission device 22-1 by heat conduction. As a result, it is possible to realize a measure against the cooking heat. Here, usually, since the cooking robot 10 operates near a person, it is desirable that the constituent members of the cooking robot 10 including the power transmission device 22 are light in weight also in terms of reducing the impact when coming into contact with the person. Therefore, a resin-based material that is lighter than a metal-based material is useful. However, since the resin-based material has poor heat resistance compared to the metal-based material, the cooking heat is likely to be a problem. In the present embodiment, since the input heat of the cooking heat can be suppressed by the first output member 70-1, the use of the resin-based material can be promoted, and the weight saving of the cooking robot 10 can be achieved.

In addition, in configuring the other member 90 and the first output member 70-1 with the resin-based material, the other member 90 may be configured with a carbon fiber reinforced resin, and the first output member 70-1 may be configured with a resin-based material (for example, only resin) that does not contain reinforcing fibers.

All the first heat transfer path members 88-1 on one heat transfer path 87A are made of a material having higher thermal conductivity than the first output member 70-1. The expression "all" as referred to herein refers to all of the plurality of first heat transfer path members 88-1 in a case where the plurality of first heat transfer path members 88-1 are provided, and refers to only the single first heat transfer path member 88-1 in a case where the single first heat transfer path member 88-1 is provided. In order to satisfy this condition, the first main bearing 64-1 serving as the first heat transfer path member 88-1 is made of a metal-based material having higher thermal conductivity than the first output member 70-1. In addition, the first input-side casing member 54a-1 and the first counter input-side casing member 54b-1 that serve as the first heat transfer path members 88-1 are made of the same resin-based material as that of the first connected member 72-1. In addition, the casing members 54a-1 and 54b-1 may be made of a resin-based material different from that of the first connected member 72-1 and having higher thermal conductivity than the first output member 70-1. For example, the casing members 54a-1 and 54b-1 may be made of a resin-based material in which carbon fibers are contained in a base material resin different from that of the first connected member 72-1, in the same manner as the first connected member 72-1.

The metal-based material as referred to herein refers to a material whose main material is metal. The metal-based material may be composed of only metal (including an alloy) as a main material, or may be composed of a composite material (fiber reinforced metal or the like) of metal as a main material and another member. The metal that is used here refers to, for example, an iron-based material such as cast iron or steel, or an aluminum-based material such as aluminum or an aluminum alloy. The first main bearing 64-1 is made of, for example, a steel material such as high carbon chromium bearing steel as a metal-based material.

In this way, compared to a case where the first heat transfer path member 88-1 is made of a material having lower thermal conductivity than the first output member 70-1, the heat of the first connected member 72-1 (the other member 90) can be actively released to the first fixed member 40-1 through the first heat transfer path member 88-1. Eventually, the heat of the first connected member 72-1 and the first heat transfer path member 88-1 can be effectively dissipated to the external space by using the first fixed member 40-1 outside the first power transmission device 22-1.

In particular, in a case where the first connected member 72-1 (the other member 90) is configured by a gear (here, the first output internal gear 52-1) that generates heat due to meshing, the heat of the gear is released to the first fixed member 40-1, and thus, it is possible to suppress the occurrence of an adverse effect (thermal deterioration or the like) caused by the temperature rise of the gear. Here, an example in which the first connected member 72-1 is an internal gear has been described. However, the same effect can be obtained even in a case where the first connected member 72-1 is an external gear. That is, it can also be said that the first connected member 72-1 may be any of an external gear and an internal gear.

The first connection member 76-1 (here, a bolt) that connects the first output member 70-1 and the first connected member 72-1 is made of a material having higher thermal conductivity than the first output member 70-1. In order to realize this, the first connection member 76-1 is made of a metal-based material, specifically, a steel material such as general structural rolled steel, cold forging carbon steel, or mechanical structural carbon steel. The first connection member 76-1 is made of a material having higher thermal conductivity than the first output member 70-1.

The first power transmission device 22-1 includes a covering member 92 that covers a part of the first connection member 76-1 exposed on the first driven member 42-1 side in the axial direction with respect to the first output member 70-1. The covering member 92 is a separate body from the first driven member 42-1. The first output member 70-1 includes a first counterbore 70a-1 that accommodates a head portion 76a-1 of the first connection member 76-1. The covering member 92 of the present embodiment is a cap that covers the head portion 76a-1 of the first connection member 76-1. The covering member 92 of the present embodiment is disposed to be accommodated in the first counterbore 70a-1. The covering member 92 covers the entire head portion 76a-1 of the first connection member 76-1 so as not to be exposed. The covering member 92 is mounted on a part of the first connection member 76-1 by, for example, adhesion, press fitting, or the like. In addition, the covering member 92 may be filled (molded) in the first counterbore 70a-1.

The covering member 92 is made of a material having lower thermal conductivity than the first connection member 76-1. In addition, the covering member 92 may be made of a material having lower thermal conductivity than the first connected member 72-1 (the other member 90), as in the first output member 70-1. In realizing this, the covering member 92 of the present embodiment adopts a resin-based material, but may adopt a metal-based material. For example, the covering member 92 may be made of a resin-based material containing reinforcing fibers having lower thermal conductivity than carbon fibers.

In this way, compared to a case where the covering member 92 is made of a material having higher thermal conductivity than the first connection member 76-1, the heat transfer due to convection from the first driven member 42-1 close to the first connection member 76-1 to the first connection member 76-1 can be effectively blocked by the covering member 92. Therefore, it is possible to suppress the heat transfer of the cooking heat that tries to be transmitted to the first connected member 72-1 through the first connection member 76-1 without being blocked by the first output member 70-1. Eventually, the transfer of the cooking heat from the first output member 70-1 and the first connected member 72-1 to the other location of the first power transmission device 22-1 can be avoided.

The first driven member 42-1 is disposed to cover the internal space of the first hollow portion 46c-1 of the first wave generator shaft 46-1 from the counter input side. In this way, the flow of air between the internal space of the first wave generator shaft 46-1 and the external space is blocked by the first driven member 42-1. Therefore, even though the first driven member 42-1 is present in the vicinity of the first wave generator shaft 46-1, it becomes difficult to cause convection in the internal space of the first wave generator shaft 46-1, and it becomes difficult to cause heat transfer due to convection between the two.

The components other than the output members 70-1 and 70-2 are the same material as the components common to the first power transmission device 22-1 and the second power transmission device 22-2. For example, the second connected member 72-2 is made of the fiber reinforced resin described above, as in the first connected member 72-1. In addition, the components to be described next are made of the same material for both the first power transmission device 22-1 and the second power transmission device 22-2. Specifically, the wave generator shaft 46, the external gear 48, the wave generator bearing 60, the regulating member 62, the bolts B1 and B2, and the like are metal members made of a metal-based material having a higher heat transfer coefficient than the first output member 70-1, as in the first connection member 76-1. In addition, the speed change internal gear 50 and the input-side cover 56 are resin members made of a resin-based material having a higher heat transfer coefficient than the first output member 70-1. In the present embodiment, as the resin-based material, the same fiber reinforced resin as that of the first connected member 72-1 (the other member 90) is adopted. In this manner, some of the constituent members of the power transmission device 22 are set to be resin members, so that it is possible to achieve weight saving and cost reduction of the power transmission device 22, compared to a case where the components are set to be metal members. However, the present invention is not limited thereto, and even though the components are common to the first power transmission device 22-1 and the second power transmission device 22-2, different materials may be used.

In addition, the first fixed member 40-1, the second fixed member 40-2, the first driven member 42-1, and the second driven member 42-2 of the cooking robot 10 are made of any of a metal-based material and a resin-based material having higher thermal conductivity than the first output member 70-1.

Fig. 3 is referred to. Next, the features of the second power transmission device 22-2 will be described. The second output member 70-2 of the second power transmission device 22-2 is made of a material having higher thermal conductivity than the first output member 70-1 of the first power transmission device 22-1. In order to realize this, the second output member 70-2 of the present embodiment is made of, for example, the same material as the first connected member 72-1 (the first output internal gear 52-1) of the first power transmission device 22-1, that is, a carbon fiber reinforced resin as the resin-based material described above. The material of the second output member 70-2 is not limited to the same material as that of the first connected member 72-1 (the first output internal gear 52-1), and various materials can be adopted as long as the materials have higher thermal conductivity than the first output member 70-1.

As described above, the cooking heat that is applied to the cooking attachment 18 is transmitted toward the base end side from the tip part (the mounting portion 20) in the cooking robot 10 by heat conduction. The second output member 70-2 of the second power transmission device 22-2 is farther from the mounting portion 20, which is located at the tip part of the cooking robot 10, than the first output member 70-1 of the first power transmission device 22-1. In the first power transmission device 22-1 close to the mounting portion 20, the transfer of the cooking heat is blocked as much as possible by the first output member 70-1. On the other hand, in the second power transmission device 22-2 far from the mounting portion 20, since the cooking heat has been already blocked as much as possible by the first power transmission device 22-1 and the second power transmission device 22-2 is far from the mounting portion 20, the necessity of blocking the cooking heat is low.

In the interior of the second power transmission device 22-2, internal heat acting on the second connected member 72-2 may be generated due to meshing of the gear pair, or the like. The heat transfer coefficient of the second output member 70-2 of the second power transmission device 22-2 is set to be higher than the first output member 70-1, so that the internal heat acting on the second connected member 72-2 is easily released to the second driven member 42-2 through the second output member 70-2. Eventually, the internal heat of the second power transmission device 22-2 can be effectively dissipated to the external space by using the second driven member 42 while the transfer of the cooking heat is blocked by the first output member 70-1. In addition, usually, a material having high thermal conductivity is often more excellent than a material having low thermal conductivity in terms of intensity, life, or the like. For example, the metal having high thermal conductivity is often more excellent in intensity or life than the resin having low thermal conductivity. In addition, a carbon fiber reinforced resin having high thermal conductivity is often more excellent in intensity or life and more preferable in terms of the performance of the power transmission device than a glass fiber reinforced resin having low thermal conductivity. Therefore, the performance of the second power transmission device 22-2 can be improved by adopting a material having a higher heat transfer coefficient than the first output member 70-1 for the second output member 70-2 having a low necessity of blocking the cooking heat.

The second power transmission device 22-2 includes a second connection member 76 that connects the second output member 70-2 and another member (the second connected member 72-2). The second connection member 76 is made of a metal-based material, as in the first connection member 76-1. The second connection member 76 is different from the first connection member 76-1, and is exposed without being covered with a covering member, which is a separate body from the second driven member 42, on the second driven member 42 side in the axial direction with respect to the second output member 70-2.

As described above, in the second power transmission device 22-2 far from the mounting portion 20, unlike the first power transmission device 22-1, the necessity of blocking the cooking heat is low. In such a second power transmission device 22-2, a covering member like that of the first power transmission device 22-1 is omitted, so that the cost of the cooking robot 10 can be reduced.

In addition, the configurations of the first power transmission device 22-1 and the second power transmission device 22-2 are common to each other in other aspects. The material of each member described so far is an example, and a specific example thereof is not limited thereto as long as the conditions relating to the magnitude of the thermal conductivity are satisfied. For example, a member serving as a metal member may be made of a resin-based material instead of a metal-based material, and a member serving as a resin member may be made of a metal-based material instead of a resin-based material.

Next, modification forms of each component described so far will be described.

The power transmission device 22 may be an actuator (an electric actuator, a fluid actuator, or the like) in which the driving device 44 and the driven device are combined. In addition, the power transmission device 22 may be used as the driving device 44 instead of the driven device. In addition, the power transmission device 22 may include a traction drive. The power transmission devices 22-A to 22-E may have the same type of power transmission mechanism (for example, the same type of gear transmission mechanism) or may have different types of power transmission mechanisms.

In a case where the power transmission device 22 includes a gear device, a specific type of the gear device is not particularly limited. The gear device may be a simple planetary gear device, an eccentric oscillating type gear device, a parallel axis gear device, or an orthogonal axis gear device, in addition to the bending meshing type gear device. In the case of the bending meshing type gear device, a specific type thereof is not particularly limited and may be a cup type or a silk hat type, in addition to the tubular type. In addition, a bending gear that is flexibly deformed by a wave generator may be an internal gear instead of an external gear 48. In the case of the eccentric oscillating type gear device, a specific type thereof is not particularly limited. As this type, in addition to a center crank type in which a crankshaft is disposed at the rotation center of the output member 70, a distribution type in which a crankshaft is disposed at a position offset from the rotation center of the output member 70 may be used.

Here, an example in which the material of the first output member 70-1 is a resin-based material has been described. However, the material may be a material having a lower heat transfer coefficient than the other member 90 (for example, the first connected member 72-1) of the first power transmission device 22-1, and a specific example thereof is not particularly limited. For example, the first output member 70-1 may be made of a metal-based material.

Both the first output member 70-1 and the other member 90 (for example, the first connected member 72-1) may be made of a carbon fiber reinforced resin. In this case, any of the thermal conductivity of the base material resin contained in the carbon fiber reinforced resin and the proportion of the reinforcing fibers to the base material resin may be adjusted to set the thermal conductivity of the first output member 70-1 to be lower than that of the other member 90.

The first power transmission device 22-1 does not need to include the covering member 92. The second power transmission device 22-2 may include a covering member that covers a part of the second connection member 76 on the second driven member 42 side.

A part of the first heat transfer path member 88-1 may be made of a material having lower thermal conductivity than the first output member 70-1.

Although the first power transmission device 22-1 has been described as an example of the first-stage power transmission device 22-A, the first power transmission device 22-1 may be any of other power transmission devices 22-B to 22-E located on the base end side of the first-stage power transmission device 22. Although an example has been described in which the second power transmission device 22-2 is configured by each of two or more power transmission devices 22 among the plurality of power transmission devices 22 that are incorporated in the cooking robot 10, the second power transmission device 22-2 may be configured by only one power transmission device.

The heat transfer coefficient of the second output member 70-2 of the second power transmission device 22-2 may be equal to or lower than the heat transfer coefficient of the first output member 70-1 of the first power transmission device 22-1.

Since a load larger than the load on the other power transmission devices 22 in the cooking robot 10 acts on the power transmission device 22 (in Fig. 1, the fifth-stage power transmission device 22-E) located closest to the base side, the required load resistance is increased. For this reason, the location that is a resin member in the power transmission device 22 may be made of a metal-based material instead of a resin-based material. In configuring the location with such a metal-based material, the location may be made of an aluminum-based material having an excellent heat transfer coefficient. In this way, the heat of the power transmission device 22 can be actively released toward the large-volume base 24 while securing the required load resistance.

The above embodiment and modification forms are exemplification. The technical ideas that abstract these examples should not be construed to be limited to the contents of the embodiment and modification forms. Many design changes such as change, addition, and deletion of components can be made in the contents of the embodiment and modification forms. In the embodiment described above, the content in which such a design changes can be made is emphasized by adding a notation "embodiment". However, design changes are allowed even in a content in which there is no such notation.

### Industrial Applicability

The present disclosure relates to a power transmission device that is incorporated in a cooking robot.

### Reference Signs List

10 cooking robot
16-1 first drive unit
16-2 second drive unit
18 cooking attachment
20 mounting portion
22-1 first power transmission device
22-2 second power transmission device
42-1 first driven member
42-2 second driven member
70-1 first output member
70-2 second output member
72 connected member
74-1 first connection member
74-2 second connection member
88 heat transfer path member
90 another member
92 covering member

## Claims

1. A power transmission device that is incorporated in a cooking robot including a mounting portion on which a cooking attachment is mounted, the power transmission device comprising:
an output member made of a material having lower thermal conductivity than another member of the power transmission device.

2. The power transmission device according to claim 1,
wherein the other member and the output member are made of a resin-based material.

3. The power transmission device according to claim 2,
wherein the other member is made of a fiber reinforced resin containing carbon fibers in a base material resin, and
the output member is made of a fiber reinforced resin containing reinforcing fibers other than the carbon fibers in a base material resin, or a resin-based material that does not contain the reinforcing fibers.

4. The power transmission device according to claim 3,
wherein the output member and the other member are made of fiber reinforced resins having the same base material resin.

5. The power transmission device according to any one of claims 1 to 4, further comprising:
a connection member that connects the other member and the output member; and
a covering member that covers a part of the connection member exposed on a driven member side with respect to the output member,
wherein the covering member is made of a material having lower thermal conductivity than the connection member.

6. The power transmission device according to any one of claims 1 to 5,
wherein the cooking robot includes a fixed member to which the power transmission device is fixed and which supports the power transmission device,
the power transmission device includes a connected member that is connected to the output member, and at least one heat transfer path member provided on one heat transfer path extending from the connected member to the fixed member, and
all the heat transfer path members on the one heat transfer path are made of a material having higher thermal conductivity than the output member.

7. A cooking robot including a mounting portion on which a cooking attachment is mounted, the cooking robot comprising:
a first power transmission device that is incorporated in a first drive unit close to the mounting portion in the cooking robot; and
a second power transmission device that is incorporated in a second drive unit farther from the mounting portion than the first drive unit in the cooking robot,
wherein the first power transmission device is the power transmission device according to any one of claims 1 to 6, and
the second power transmission device includes a second output member made of a material having higher thermal conductivity than a first output member which is an output member of the first power transmission device.

8. The cooking robot according to claim 7,
wherein the first power transmission device includes a first connection member that connects the other member and the first output member of the first power transmission device, and a covering member that covers a part of the first connection member exposed on a first driven member side driven by the first output member with respect to the first output member,
the second power transmission device includes a second connection member that connects the second output member and another member of the second power transmission device, and
the second connection member is not covered with a covering member on a second driven member side driven by the second output member with respect to the second output member.
